Europäisches Patentamt

European Patent Office

Office européen des brevets

(11) Veröffentlichungsnummer: **0 345 895**

**A1**

## (12) EUROPÄISCHE PATENTANMELDUNG

(21) Anmeldenummer: **89201435.8**

(22) Anmeldetag: **31.05.89**

(51) Int. Cl.⁴: **G01N 21/39**

(30) Priorität: **08.06.88 DE 3819531**

(43) Veröffentlichungstag der Anmeldung:
**13.12.89 Patentblatt 89/50**

(84) Benannte Vertragsstaaten:
**ES GR**

(71) Anmelder: **Szepan, Reiner**
**Elektrastrasse 26a**
**D-8000 München 81(DE)**

Anmelder: **Riener, Karl Stefan**
**Müllerviertel 20**
**A-4563 Micheldorf(AT)**

(72) Erfinder: **Szepan, Reiner**
**Elektrastrasse 26a**
**D-8000 München 81(DE)**

(74) Vertreter: **von Samson-Himmelstjerna,**
**Friedrich R. Dipl.-Phys. et al**
**Samson & Bülow Widenmayerstrasse 5/I**
**D-8000 München 22(DE)**

(54) Verfahren und Vorrichtung zur spektroskopischen Mengenbestimmung von Gasen in Gasgemischen.

(57) Die Erfindung betrifft ein Verfahren sowie eine Vorrichtung zur spektroskopischen Mengenbestimmung von Gasen (4) in Gasgemischen, bei dem periodisch alternierend monochromatisches Licht (1) wenigstens zweier Wellenlängen benutzt wird, wobei das Licht (1) wenigstens einer Wellenlänge charakteristisch, und das Licht (1) wenigstens einer anderen Wellenlänge uncharakteristisch für die Transmission des zu bestimmenden Gases ist, wobei diese Transmission elektrische Signale erzeugt, welche harmonische Anteile mindestens einer ungeraden Fourier-Frequenz einer Emissionsperiode beinhalten, deren Amplitude proportional der Konzentration des zu bestimmenden Gases (4) im Gasgemisch ist, und mit der Konzentration verschwindet.

Fig 2

EP 0 345 895 A1

## Verfahren und Vorrichtung zur spektroskopischen Mengenbestimmung von Gasen in Gasgemischen

Die Erfindung betrifft ein Verfahren nach den kennzeichnenden Merkmalen des Oberbegriffs von Patentanspruch 1, sowie eine Vorrichtung nach den kennzeichnenden Merkmalen des Patentanspruchs 6.

Die Mengenbestimmung von bestimmten Gasen in Gasgemischen erfolgt anhand der Absorption von Strahlung mit für das betreffende Gas charakteristischen Wellenlängen. Molekülgase verfügen insbesondere dazu über eine ausgeprägte Charakteristik im fernen Infrarotbereich.

Zur spektralen Unterscheidung der charakteristischen Absorption durch das gesuchte Gas von einer Hintergrundstrahlung bzw. der uncharakteristischen Strahlungsdämpfung auf dem Übertragungsweg wird die Emission einer geeigneten Strahlungsquelle nach üblichen differentiellen Analyseverfahren bei einer für das bestimmte Gas charakteristischen Wellenlänge bzw. bei einer diesbezüglich benachbarten unspezifischen Wellenlänge mit jeweiliger Unterbre chung periodisch sequenziert.

Als Strahlungsquellen bieten sich Laser an; im sichtbaren Bereich kommt hierfür ein Farbstofflaser und im Infrarotbereich ein geeigneter Molekülgaslaser in Frage. Letztere nutzen die Schwingungs-Rotationsübergänge der betreffenden Gase. Der Molekülgaslaser wird mittels eines von einer Mikoropositioniervorrichtung getragenen Resonatorspiegels bzw. optischen Gitters auf die Wellenlängen der jeweils gewünschten Emissionslinien abgeglichen. Die Mikroposition kann durch elektrische Signale zur Erzeugung der periodischen Emissionssequenz mit unterschiedlichen Wellenlängen gesteuert werden.

In diesem Zusammenhang ist die Mengenbestimmung von Ammoniak in Rauchgasen von großtechnischer Bedeutung. Rauchgase entstehen bei jeder atmosphärischen Verbrennung und mit ihnen zwangsläufig Stickoxide $NO_x$. Diese lassen sich einerseits katalytisch durch Ammoniakspeisung zu schadfreien Produkten reduzieren, andererseits ist der sogenannte "Schlupf", d. h. ein merklicher Ammoniaküberschuß, unerwünscht.

Naturgesetzlich fallen je eine Linie der Schwingungs-Rotationsbanden von Ammoniak bzw. $^{13}C^{16}O_2$ bei der Wellenlänge von 9.89μm unter Normal- oder den Betriebsbedingungen einer Feuerungsanlage innerhalb der Linienbreiten zusammen, so daß die Absorption der Strahlung eines abgestimmten $^{13}C^{16}O_2$ - Lasers in einem Gasgemisch Auskunft über den Ammoniakgehalt gibt.

Bei Spurenanteilen des gesuchten Gases - hier Ammoniak im Rauchgas - unterscheidet sich die spezifische und unspezifische Absorption in der Laseremissionsfolge allerdings nur wenig, so daß die Transmissionssignale der Sequenz nur gering voneinander abweichen und zudem noch mit inkohärenten Signalrauschbeiträgen aus der Laseremission, der Störung des Meßpfades und aus der Detektorvor richtung befrachtet sind. Diese Gegebenheiten erfordern lange Signalintegrationszeiten um die notwendigen, etwa prozeßtechnisch geforderten Signalsicherheiten zu erlangen, was hingegen hohe betriebliche Stabilitätsanforderungen an die Anordnung voraussetzt.

Aufgabe der Erfindung ist es, ein gattungsgemäßes Verfahren sowie eine gattungsgemäße Vorrichtung so weiterzubilden, daß ein bestimmter Gasanteil eines Gasgemisches besser ermittelt werden kann.

Diese Aufgabe wird verfahrensmäßig durch die kennzeichnenden Merkmale des Patentanspruchs 1 und vorrichtungsmäßig durch die kennzeichnenden Merkmale des Patentanspruchs 6 gelöst.

Bei einer vorteilhaften Ausführungsform des erfindungsgemäßen Verfahrens werden die harmonischen Signalanteile wenigstens einer ungeraden Fourier-Frequenz zu denen einer geraden Fourier-Frequenz ins Verhältnis gesetzt, und dieses Verhältnis ist ein Maß für die charakteristische Absorption.

Bei einer weiteren vorteilhaften Ausführungsform des erfindungsgemäßen Verfahrens nimmt die zweite Fourierkomponente des elektrischen Signals ein Maximum an.

Bei einer anderen vorteilhaften Ausführungsform des erfindungsgemäßen Verfahrens erfolgt die Emission der benutzten Strahlungsimpulse mit jeweils konstanter Leistung, und die Impulszentren haben den Abstand der halben Emissionsperiode.

Bei einer weiteren vorteilhaften Ausführungsform des erfindungsgemäßen Verfahrens sind die Emissionen beider die unterschiedlichen Wellenlängen erzeugenden Übergänge gleichdauernd und durch gleichdauernde emissionsfreie Phasen getrennt.

Bei einer anderen vorteilhaften Ausführungsform des erfindungsgemäßen Verfahrens sind die jeweiligen Emissionsphasen und die emissionsfreien Phasen gleichdauernd.

Bei einer vorteilhaften Ausführungsform der erfindungsgemäßen Vorrichtung ist das Gas Ammoniak und die Lichtquelle ein Laser, insbesondere ein $^{13}C^{16}O_2$-Laser, der periodisch alternierend Strahlung des quantenmechanischen P8II-Übergangs des Rotations-/Schwingungsspektrums und eines benachbarten Überganges (z. B. P6II bzw. P10II), emittiert.

Bei einer anderen vorteilhaften Ausführungsform der erfindungsgemäßen Vorrichtung ist eine Schaltung vorgesehen, mit der die elektrischen Signale aneinander angeglichen werden.

Bei einer weiteren vorteilhaften Ausgestaltung der erfindungsgemäßen Vorrichtung ist die Emissionsdauer der größeren Leistung des Lasers 1 mittenzentriert verringert oder vergrößert.

Bei einer anderen vorteilhaften Ausführungsform der erfindungsgemäßen Vorrichtung ist ein Infrarotdetektor vorgesehen, der Signalamplituden aufweist, die von der wellenlängensequenzierten Laseremission bzw. der Transmission eines ammoniakhaltigen Gases herrühren, und es ist eine Symmetrie-Mischerschaltung vorgesehen, die mit einem Signal der zweiten Fourier-Frequenz der Emissionsperiode verknüpft wird.

Bei einer weiteren vorteilhaften Ausführungsform der erfindungsgemäßen Vorrichtung werden vorgenannte Mischprodukte nach einer Filterung in einer Vorrichtung einer Synchron-Gleichrichtung unterworfen, die mit einem Signal der ersten Fourrier-Frequenz der Emissionsperiode gesteuert wird.

Bei einer anderen vorteilhaften Ausgestaltung der erfindungsgemäßen Vorrichtung ist eine Quotientenschaltung vorgesehen, mittels derer Signalverhältnisse aus den gefilterten Gleichrichterprodukten und dem Gleichanteil des Mischproduktes eine von der Emissionsstärke der Lichtquelle und von den nichtspektralen Transmissionsminderungen unabhängige Größe erzeugt wird.

Bei einer weiteren vorteilhaften Ausgestaltung der erfindungsgemäßen Vorrichtung werden die Signalamplituden aus einem Infrarotdetektor, die von der wellenlängensequenzierten Emission der Lichtquelle herrühren als das Fehlersignal einer proportionalen Regelschleife zugeführt, welche die sequentielle Verstärkung des Signals des Infrarotdetektors bzw. die Emissionsdauer einstellt.

Bei einer weiteren vorteilhaften Ausführungsform der erfindungsgemäßen Vorrichtung wird ein optischer Resonator des Lasers periodisch wellenlängenmoduliert, und die dabei einstehenden modulationsfrequenten Signalanteile eines Infrarotdetektors dienen infolge der Laseremissionsschwankung als Fehlergröße in einer integralen Regelschleife zur Maximierung der jeweiligen Emissionen.

Bei einer weiteren vorteilhaften Ausgestaltung der erfindungsgemäßen Vorrichtung ist eine Referenzküvette angeordnet, die von der wellenlängensequenzierten Emission des Lasers durchstrahlt wird, wobei eine betriebliche Kenngröße erzeugt wird, die der Referenzgasmenge proportional ist.

Ausführungsbeispiele der Erfindung sind in den Zeichnungen dargestellt und werden im folgenden näher erläutert:

Es zeigen:

Fig. 1 eine schematische Darstellung der optischen Anordnung gemäß der Erfindung;

Fig. 2 eine schematische Schaltungsanordnung zur Gasmengenbestimmung;

Fig. 3 eine schematische Schaltungsanordnung zur Signalkonditionierung;

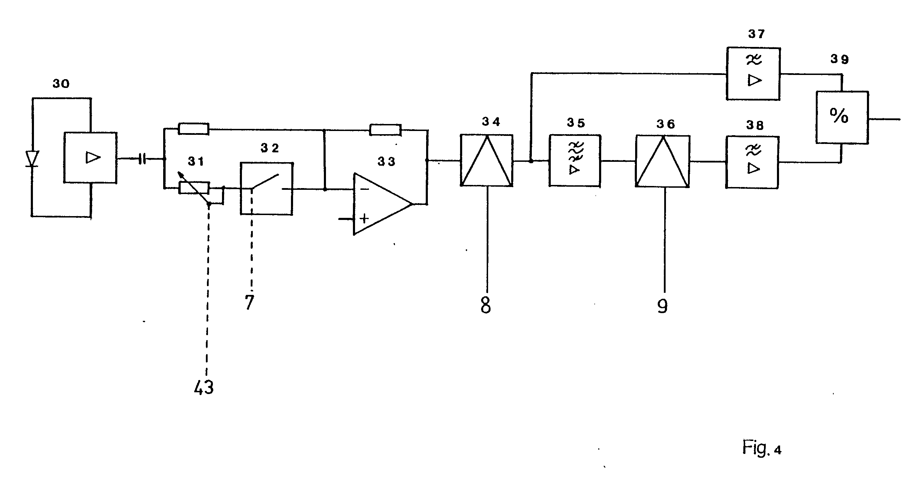

Fig. 4 eine schematische Schaltungsanordnung zur Eichung;

Fig. 5 elektronische Signalverläufe;

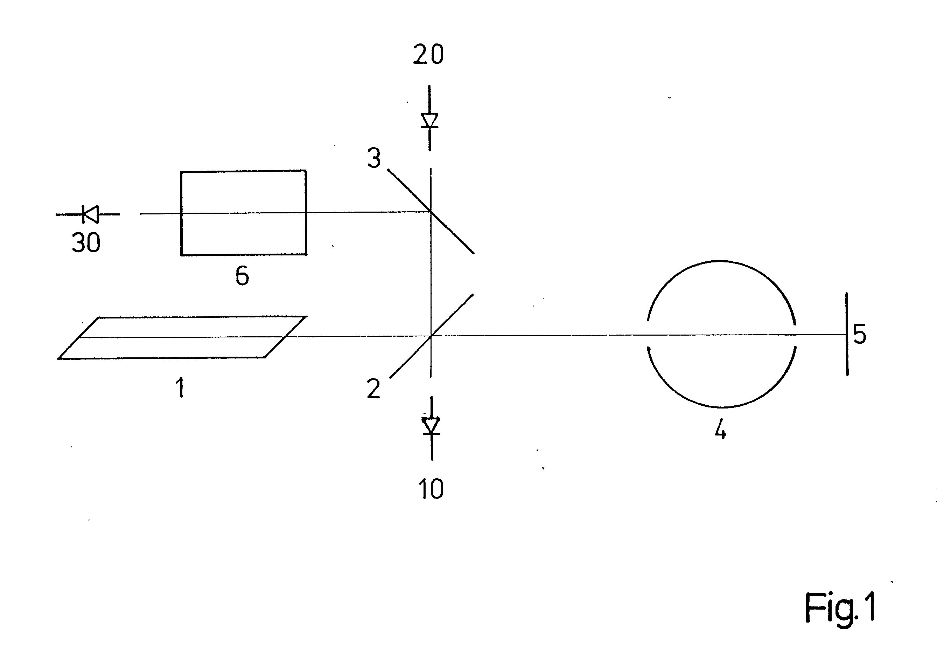

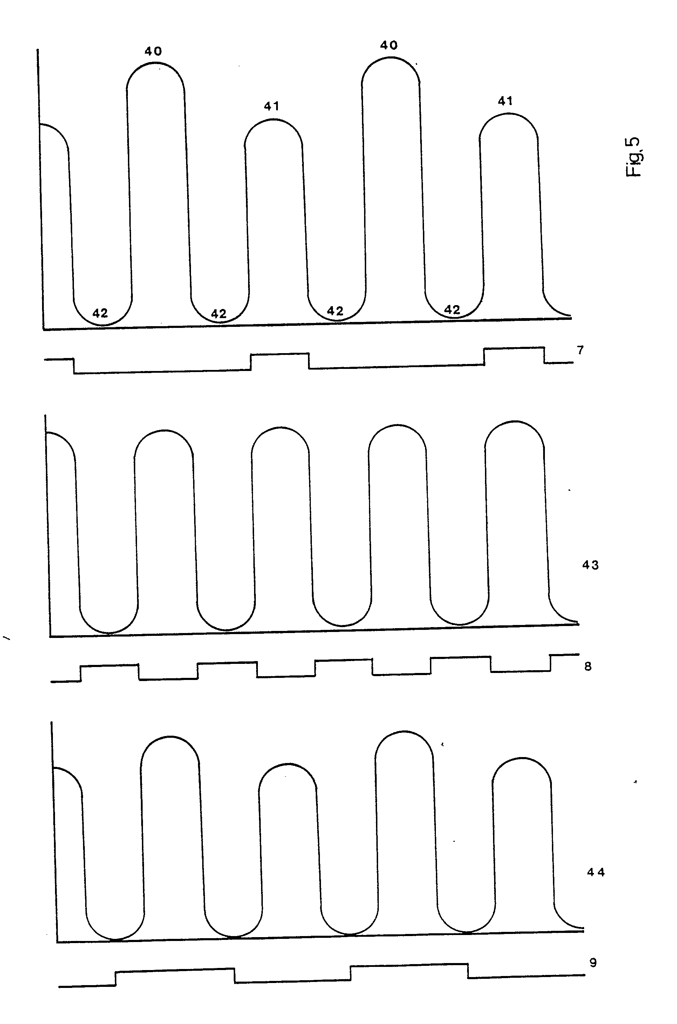

Fig. 1 zeigt einen den Analysenraum mit einem ein gesuchtes Gas (4) durchstrahlenden Laser (1), der eine periodische Sequenz von zwei, durch Pausen oder zumindest durch Abschwächungsphasen (42) getrennte Emissionen (40, 41) mit jeweils zugeordneter, alternierender Wellenlänge, wie auch in Fig. 5 gezeigt wird, erzeugt. Diese Periode wird nachfolgend als die Emissionsperiode und der Reziprokwert ganzzahliger Teilverhältnisse der Emissionsperiode als Fourierfrequenz der dem Teilverhältnis entsprechenden Ordnung bezeichnet.

Zur Ammoniakgasmengenbestimung z. B. in Rauchgasen bietet sich aufgrund der selektiven Eigenschaften und des Wirkungsgrades vorteilhafterweise die Emission des quantenmechanischen Übergangs P8II des Rotations-Schwingungsspektrums eine $^{13}C^{16}O_2$-Lasers als charakteristischer Nachweis an.

Zur signalprozeßtechnischen Beherrschung der differentiell geringen, aufgrund der Absorption des gesuchten Gases (4) auf einem optischen Meßweg Strahlenteiler 2, Analyseraum mit Gas 4, Retrospiegel 5, Strahlungsdetektor (10) in Erscheinung tretenden Transmissionsänderung neben dem dominanten Emissionspegel des Lasers (1) und der Rauschsignalüberlagerung kommen die schmalbandigen, kohärenten Signalprozeßmethoden der gegenständlichen Erfindung in Anwendung. Demnach wird ein elektrisches Wechselsignal mit der Frequenz einer ungeradzahligen Fourierkomponente der Emissionsperiode erzeugt, dessen Amplitude proportional der Laseremissionsleistung und den Transmissionsverlusten, die sich aus der charakteristischen Absorption ergeben, ist und mit den charakteristischen Transmissionsverlusten verschwindet. Zudem wird ein elektrisches Signal mit der Frequenz einer geradzahligen Fourierkomponente der Emissionsperiode erzeugt, dessen Amplitude proportional der Leistung mindestens eines Emissionsimpulses ist. Dazu bedarf es der Konditionierung der Emission oder der elektrischen Signale, die mittels geeigneter Strahlungsdetektoren (10, 20, 30) nebst Verstärker als Empfänger der Emission gewonnen werden.

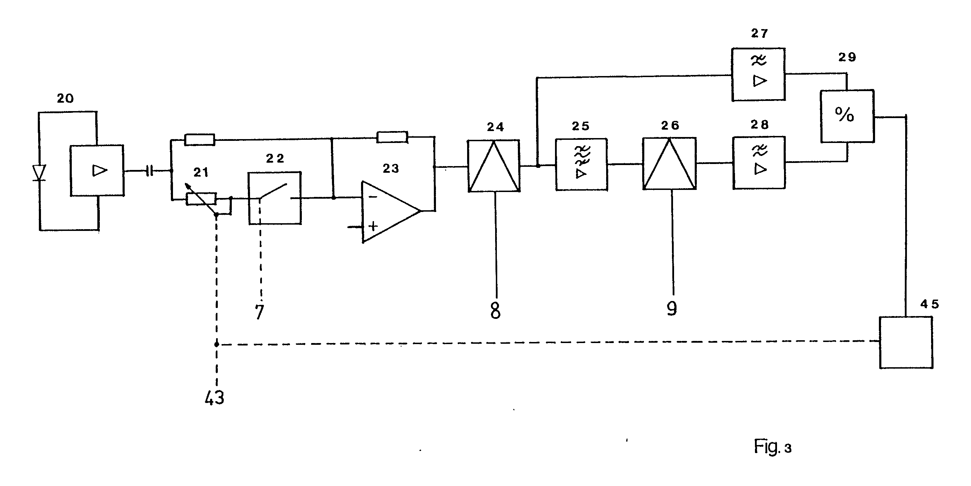

Mit Hilfe eines eigenen optischen Weges (2,20), der keine Anteile des gesuchten Gases (4) enthält, und eines eigenen elektrischen Signalwegs (20...29) erfolgt diese Signalkonditionierung auf 2 Arten mittels Regelandordnungen, wie z.B. in Fig. 3 gezeigt.

Wie in Fig. 5 gezeigt, sind die Zentren der beiden Strahlungsimpulse (40, 41) mit jeweils konstanter Leistung durch die halbe Emissionsperiode getrennt. Der Strahlungsimpuls (40) größerer Leistung wird mittenzentriert so verlängert oder gekürzt, daß die erste Fourierkomponente der Emissionsperiode am Detektor (30) verschwindet. Es entfallen hierbei Komponenten (11, 12, 13, 21, 22, 23, 31, 32, 33), die im folgenden noch näher erläutert werden.

Die Zentren der beiden Strahlungsimpulse (40, 41) mit jeweils konstanter Leistung sind durch die halbe Emissionsperiode getrennt. Mittels des Summationsverstärkers (23) wird eine angleichende Anhebung der Verstärkung des schwächeren Impulses (41) am Detektor (20) bzw. eine angleichende Abschwächung des stärkeren Impulses durch Zuschaltung (22) bzw. Abschaltung eines elektronischen Potentiometers (21) in der zugeordneten Emissionsphase (7) vorgenommen, so daß die erste Fourierkomponente (44 bzw. 43) der Emissionsperiode am Ausgang des Verstärkers (23) verschwindet.

Das konditionierte Signalgemisch am Eingang des Symmetriemischers (24) wird in diesem mit einem Signal (8) der zweiten Fourierfrequenz der Emissionsperiode gemischt, wobei die Signalanteile eben dieser Frequenz verschwinden bzw. geschwächt werden, so daß nach der Filter- und ggf. Verstärkerschaltung (25) lediglich noch Signalanteile der ersten Fourierfrequenz der Emissionsperiode vorliegen, die aus einer Verstimmung der Signalkonditionierung nach Fig. 3 stammen. Die Magnitude und das Vorzeichen derartiger Signalanteile liegen mit dem Ausgangssignal (28) des Synchrongleichrichters (26) vor, der mit einem Signal der ersten Fourierfrequenz (9) der Emissionsperiode geschaltet wird. Die Gleichrichtersignale (24, 26) werden von Tiefpaßschaltungen (27, 28) geglättet, wobei die Summengruppenlaufzeit der Filter (25, 28) gleich der Gruppenlaufzeit des Filters (27) ist. Eine Quotientenschaltung (29) liefert einen von der Strahlungsintensität unabhängigen Regelfehler, der über eine Regelschaltung (45) auf die Stellglieder (Mikropositionierung bzw. Potentiometer (43)) so einwirkt, daß die erste Fourierkomponente am Mischereingang (24) verschwindet.

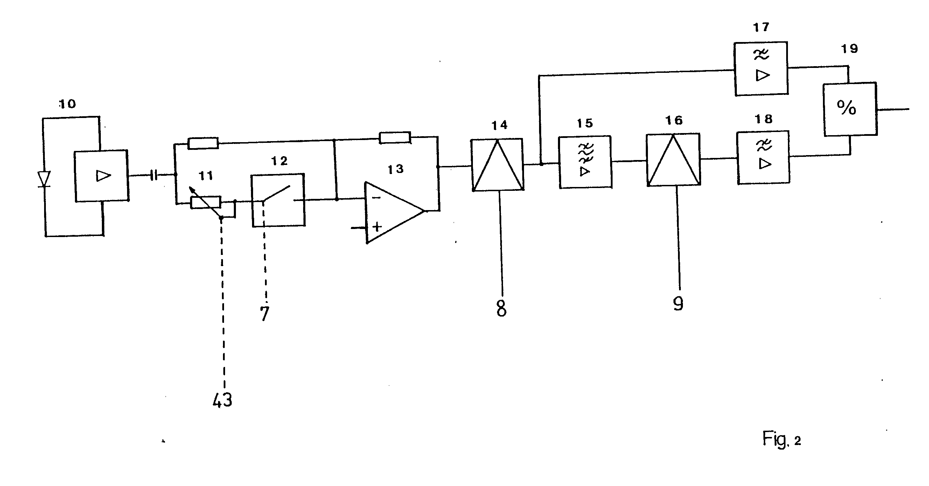

Die gascharakteristische Transmissionsschwächung auf dem Meßweg (2, 4, 5, 10) ist ein Maß für die Konzentration des gesuchten Gases (4). Diese Größe wird erfindungsgemäß nach erfolgter Signalkonditionierung (20...29, 45) als elektrisches Signal einer ungradzahligen - vorzugsweise der ersten - Fourierfrequenz der Emissionsperiode dargestellt; der in Fig. 2 dargestellte Aufbau des Meßsignalpfades (10...19) entspicht identisch dem des Konditionierungspfades (20...29).

Mit dem Strahlungsdetektor (10) wird die wellenlängenspe zifische Transmission des Prüfgases (4) gemessen und ggf. verstärkt. Da sich die Emissionsleistungen der Impulse (40, 41) bei den benutzten Wellenlängen unterscheiden, wird mittels der Konditionierung eine Pulsbreitenkorrektur bzw. anhand des Summationsverstärkers (13) eine angleichende Anhebung der Verstärkung des schwächeren Emissionssignals bzw. eine angleichende Abschwächung des stärkeren Emissionssignals durch Zuschaltung (12) bzw. Abschaltung eines elektronischen mit dem Potentiometer (21) gleichlaufenden (43) Potentiometers (11) in der zugeordneten Emissionsphase (7) vorgenommen.

Die Existenz von Signalanteilen der ersten Fourierfrequenz in den Mischprodukten (15) ist mit erfolgter Konditionierung (20...29, 45) einzig auf die spezifische Strahlungsabsorption des gesuchten Gases (4) zurückzuführen; ihre Größe ist proportional zur Konzentration des gesuchten Gases (4). Mit diesem kohärenten Analyseverfahren gelingt es erfindungsgemäß, ein sehr schwaches gasspezifisches Signal neben dem dominaten Emissionssignal zu isolieren; aus den Mischpodukten wird das Signal der ersten Fourierfrequenz der Emissionsperiode mit einem Filter (15) getrennt und ggf. verstärkt. Schließlich wird das gasspezifische Nutzsignal dem mit der ersten Fourierfrequenz geschalteten Synchrongleichrichter (16) zugeführt, welcher so die Mächtigkeit des gascharakteristischen Nutzsignals wiedergibt. Der Quotient (19) der gefilterten Signale (17, 18) stellt eine intensitätsunabhängige, der Konzentration des gesuchten Gases (4) proportionale und, dank der kohärenten Signalverarbeitungstechik, eine hochaufgelöste Prozeßgröße dar. Die Beiträge aus inkohärenten Signalrauschanteilen werden nach diesem Verfahren und Vorrichtung zur selektiven spektroskopischen Mengenbestimmung von Gasen in Gasgemischen so reduziert, daß prozeßtechnisch geforderte schnelle, gesicherte Datenfolgen (19) vorliegen.

Ein apparatives Stabilitätsproblem ergibt sich bei der Verwendung von Lasern (1) als Strahlungsquelle mit der Zentrierung des optischen Resonators bzw. Filters auf die jeweilige Emissionsmaxima. Die resonator- bzw. filtertragende und elektrisch angetriebene Mikropositioniervorrichtung führt eine Schwingbewegung aus, welche die alternierende Emission von Strahlung bei mindestens zwei Wellenlängen bewirkt. Dieser Schwingung ist eine kleine periodische, langsamere Bewegung überlagert. Der spektrale Signalanteil der Frequenz dieser Abtastbewegung im Fehlersignal (29) des Proportionalreglers (45) zur Konditionierung stellt zudem ein Fehlersignal der Integralregelung zur emissionsmaximierenden Mikropositionierung dar.

Ein anderes apparatives Stabilitätsproblem stellt sich bei der Inbetriebnahme des Verfahrens und der Vorrichtung zur selektiven spetroskopischen Mengenbestimmung von Gasen (4) in Gasgemischen. Es wird erfindungsgemäß durch einen Referenzpfad (1, 2, 3, 6, 30) gelöst. Diese Problemlösung ist bei der Inbetriebnahme redundanter Systeme mit Betriebsaufgaben von außerordentlicher Bedeutung.

Ein Strahlenteiler (3) koppelt aus der emittierten Laserstrahlung einen Anteil aus, der nach dem Durchstrahlen einer, das gesuchte Gas enthaltenden Küvette (6) auf den Strahlendetektor (30) fällt. Die Signalaufbereitung (30...39) entspricht der des Nutzsignalpfades (10...19) bzw. Konditionierungspfades (20...29). Die Schaltungsanordnung erzeugt ein Signal 39, das einer Eichgasmenge in der Küvette (6) in vorgegebenen Toleranzbereichen zugeordnet ist.

Die Dejustierung der Laseranordnung ist im wesentlichen auf die Komponentenalterung und auf thermische Einflüsse zurückzuführen. Beim Einschalten wird ein ggf. prozessorgeführter Suchlauf gestartet, der den Bereich der wellenlängenabgleichenden Mikropositioniervorrichtung des Lasers (1) auf die Referenzbedingung im Referenzmeßpfad (3, 6, 30) absucht und die Betriebspositionierung vornimmt.

Die Anordnung (2...45) kann so gestaltet werden, daß beim Ausfall des betrieblichen Lasers (1) die Emission eines weiteren Lasers in die Anordnung eingekoppelt wird.

Die Absolutmengenbestimmung des Ammoniakgehalts im Prüfgas (4) berechnet sich in einem Signalprozeßrechner anhand der Prozeßmeßdaten (29), der Emissionsbreite des Lasers (1), der Absorptionsbreite des Ammoniakdampfes und des Linienversatzes von Laseremission und Ammoniakabsorption.

## Ansprüche

1. Verfahren zur spektroskopischen Mengenbestimmung von Gasen in Gasgemischen, bei dem periodisch alternierend monochromatisches Licht wenigstens zweier Wellenlängen benutzt wird, wobei das Licht wenigstens einer Wellenlänge charakteristisch, und das Licht wenigstens einer anderen Wellenlänge uncharakteristisch für die Transmission des zu bestimmenden Gases ist,
**dadurch gekennzeichnet,**
daß diese Transmission elektrische Signale erzeugt, welche harmonische Anteile mindestens einer ungeraden Fourier-Frequenz einer Emissionsperiode beinhalten, deren Amplitude proportional der Konzentration des zu bestimmenden Gases im Gasgemisch ist, und mit der Konzentration verschwindet.

2. Verfahren nach Anspruch 1, dadurch gekennzeichnet, daß die harmonischen Signalanteile wenigstens einer ungeraden Fourier-Frequenz zu denen einer geraden Fourier-Frequenz ins Verhältnis gesetzt werden, und dieses Verhältnis ein Maß für die charakteristische Absorption ist.

3. Verfahren nach wenigstens einem der vorstehenden Ansprüche, dadurch gekennzeichnet, daß die zweite Fourierkomponente des elektrischen Signals ein Maximum annimmt.

4. Verfahren nach wenigstens einem der vorstehenden Ansprüche, dadurch gekennzeichnet, daß die Emission der benutzten Strahlungsimpulse mit jeweils konstanter Leistung erfolgt, und daß die Impulszentren den Abstand der halben Emissionsperiode haben.

5. Verfahren nach wenigstens einem der vorstehenden Ansprüche, dadurch gekennzeichnet, daß die Emissionen beider die unterschiedlichen Wellenlängen erzeugenden Übergänge jeweils gleichdauernd und durch jeweils gleichdauernde emissionsfreie Phasen getrennt sind.

6. Verfahren nach Anspruch 5, dadurch gekennzeichnet, daß die jeweiligen Emissionsphasen und die emissionsfreien Phasen gleichdauernd sind.

7. Vorrichtung zur spektroskopischen Mengenbestimmung von Gasen in Gasgemischen mit einer monochromatischen Lichtquelle, die periodisch alternierendes Licht wenigstens zweier Wellenlängen emittiert, wobei das Licht wenigstens einer Wellenlänge charakteristisch und das Licht wenigstens einer anderen Wellenlänge uncharakteristisch für die Transmission des zu bestimmenden Gases ist,
**gekennzeichnet durch**
einen Meßpfad (2, 4, 5, 10), der das zu messende Gas enthält, und
einen optischen Referenzpfad (20...29) ohne charakteristische Gasabsorption zur Bestimmung von Signalen, die proportional der Konzentration des Gases im Meßpfad (2, 4, 5, 10) sind.

8. Vorrichtung nach Anspruch 7, dadurch gekennzeichnet, daß das Gas Ammoniak und die Lichtquelle (1) ein Laser, insbesondere ein $^{1}3C^{16}O_2$-Laser ist, der periodisch alternierend Strahlung des quantenmechanischen P8II-Übergangs des Rotations-/Schwingungsspektrums und eines benachbarten Überganges, emittiert.

9. Vorrichtung nach Anspruch 7 oder 8, dadurch gekennzeichnet, daß eine Schaltung (20-29) vorgesehen ist, mit der die elektrischen Signale aneinander angeglichen werden.

10. Vorrichtung nach Anspruch 8 oder 9, dadurch gekennzeichnet, daß die Emissionsdauer der größeren Leistung des Lasers (1) mittenzentriert verringert oder vergrößert ist.

11. Vorrichtung nach wenigstens einem der Ansprüche 8 bis 10, dadurch gekennzeichnet, daß ein Infrarotdetektor (10, 20, 30) vorgesehen ist, der Signalamplituden aufweist, die von der wellenlängensequenzierten Laseremission bzw. der Transmission eines ammoniakhaltigen Gases herrühren, und

daß je eine Symmetrie-Mischerschaltung (14, 24, 34) vorgesehen ist, die mit einem Signal der zweiten Fourier-Frequenz der Emissionsperiode (8) verknüpft wird.

12. Vorrichtung nach wenigstens einem der Ansprüche 8 bis 11, dadurch gekennzeichnet, daß Mischprodukte (14, 24, 34) nach einer Filterung in je einer Vorrichtung (15, 25, 35) je einer Synchron-Gleichrichtung (16, 26, 36) unterworfen werden, die mit einem Signal der ersten Fourrier-Frequenz der Emissionsperiode (9) gesteuert wird.

13. Vorrichtung nach wenigstens einem der Ansprüche 7 bis 12, gekennzeichnet durch je eine Quotientenschaltung (19, 29, 39), mittels derer Signalverhältnisse aus den gefilterten Gleichrichterprodukten (18, 28, 38) und dem Gleichanteil des Mischproduktes (17, 27, 37) eine von der Emissionsstärke der Lichtquelle (1) und von den nichtspektralen Transmissionsminderungen unabhängige Größe erzeugt wird.

14. Vorrichtung nach wenigstens einem der Ansprüche 7 bis 13, dadurch gekennzeichnet, daß die Signalamplituden aus einem Infrarotdetektor (20), die von der wellenlängensequenzierten Emission der Lichtquelle (1) herrühren als das Fehlersignal einer proportionalen Regelschleife zugeführt werden, welche die sequentielle Verstärkung des Signals des Infrarotdetektors (20) bzw. die Emissionsdauer einstellt.

15. Vorrichtung nach wenigstens einem der Ansprüche 8 bis 14, dadurch gekennzeichnet, daß ein optischer Resonator des Lasers (1) periodisch wellenlängenmoduliert wird, und die dabei entstehenden modulationsfrequenten Signalanteile eines Infrarotdetektors (10, 20, 30) infolge der Laseremissionsschwankung als Fehlergröße in einer integralen Regelschleife zur Maximierung der jeweiligen Emissionen dient.

16. Vorrichtung nach wenigstens einem der Ansprüch 8 bis 15, dadurch gekennzeichnet, daß eine Referenzküvette (6) angeordnet ist, die von der wellenlängensequenzierten Emission des Lasers (1) durchstrahlt wird, wobei eine betriebliche Kenngröße erzeugt wird, die der Referenzgasmenge proportional ist.

Fig.1

Fig. 2

EP 0 345 895 A1

Fig. 3

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | REVIEW OF SCIENTIFIC INSTRUMENTS, Band 54, Nr. 6, June 1983, Seiten 722-727, American Institute of Physics, New York, US; W. OLSOWSKI et al.: "Filter correlation photometer" * Seiten 722-723, Teil 1 * --- | 1,7 | G 01 N 21/39 |
| A | US-A-4 410 273 (A.W. MANTZ et al.) * Spalten 3-5 * --- | | |
| A | US-A-4 441 815 (T. IZUMI) * Spalten 1-3 * --- | | |
| A | APPLIED OPTICS, Band 24, Nr. 17, 1. September 1985, Seiten 2837-2841, New York, US; A.P. FORCE et al.: "Laser remote sensing of atmospheric ammonia using a CO2 lidar system" * Seiten 2837-2838, Teil II * ----- | | |

| | RECHERCHIERTE SACHGEBIETE (Int. Cl.4) |
|---|---|
| | G 01 N 21/39 G 01 N 21/31 G 01 J 3/433 |

Der vorliegende Recherchenbericht wurde für alle Patentansprüche erstellt

| Recherchenort | Abschlußdatum der Recherche | Prüfer |
|---|---|---|
| DEN HAAG | 08-09-1989 | BOEHM CH.E.D. |